# DEMANDE DE BREVET EUROPEEN

(11) **EP 1 936 745 A2**
(43) Date de publication de la demande: **25.06.2008**
(21) Numéro de dépôt: 07123812.5
(22) Date de dépôt: 20.12.2007
(51) Int. Cl.: H01R 4/62, H01R 43/02, B23K 1/002

(54) **Procédé de raccordement de conducteurs électriques par magnétostriction et dispositif générateur de magnétostricition**

(30) Priorité: 22.12.2006 FR 0611261
(71) Demandeur: THALES, 92200 Neuilly sur Seine (FR)
(72) Inventeur: Delwaulle, Jean-Pierre, 29200 Brest (FR)
(74) Mandataire: Lucas, Laurent Jacques

(57) **Abrégé**

L'invention concerne un procédé de raccordement, à un premier conducteur comportant un connecteur, d'un second conducteur formé par au moins un brin en aluminium ou alliage d'aluminium et comportant au moins une extrémité dont la forme autorise son introduction dans le connecteur du premier conducteur. Le procédé comporte au moins les étapes suivantes :
**•** une étape de mise en place des conducteurs, l'extrémité du second conducteur étant insérée dans le connecteur du premier conducteur ;
**•** une étape de magnétostriction, un effort électrodynamique étant généré dans le connecteur de manière à ce que ledit connecteur s'écrase autour du second conducteur introduit dans le connecteur.

L'invention a aussi pour objet un dispositif générateur de magnétostriction.

En particulier, l'invention s'applique au câblage de réseaux d'énergies sur tout vecteurs et équipement (par exemple, aérospatiaux), aux liaisons à fort courant et / ou de grande longueur. L'invention peut encore s'appliquer au câblage adapté à la transmission d'information sur conducteurs banalisés.

## Description

L'invention concerne un procédé de raccordement de conducteurs électriques par magnétostriction et un dispositif générateur de magnétostriction. En particulier, l'invention s'applique au câblage de réseaux d'énergies sur tout vecteurs et équipement (par exemple, aérospatiaux), aux liaisons à fort courant et / ou de grande longueur. L'invention peut encore s'appliquer au câblage adapté à la transmission d'information sur conducteurs banalisés.

L'emploi de câble électrique comprenant des brins en aluminium ou alliage d'aluminium présente de nombreux avantages, notamment un gain significatif pour certaines applications en terme de masse par rapport à des brins en cuivre. Il existe par exemple des câbles, dit à âme massive sectorielle, constitué de trois conducteurs de phases, en forme de secteurs circulaires à 120° et d'une nappe de petits conducteurs circulaires, constituant le neutre. Bien que la fabrication de ce type de câble s'avère plus coûteuse, le gain économique est réel lorsque l'on tient compte des coûts de pose et de transport.

Il est connu d'employer sur de tels câbles des embouts bimétalliques sertis à leur extrémité en aluminium. Le raccordement aux autres équipements et câbles en cuivre s'effectue alors par le coté en cuivre desdits embouts. Il existe plusieurs modèles d'embouts, adaptés à chaque cas ( piquage en milieu de ligne, raccordement d'extrémité, mise bout à bout, réparation, etc.). Le raccordement entre les parties en cuivre et en aluminium de l'embout est métallurgique, par soudure notamment. La procédure de raccordement est la suivante :
- après dénudage, un outil permet de déformer une zone de secteur à 120° en un cylindre circulaire, la couche d'alumine superficielle est éliminée par un vigoureux brossage (par exemple une brosse métallique) sous graisse neutre, solution compatible seulement avec un conducteur suffisamment massif pour supporter un tel traitement ;
- une fois l'embout enfilé sur le conducteur, l'ensemble subit un poinçonnage profond (pénétration du métal de l'embout au coeur de celui du conducteur), créant un contact étanche à l'air.

Bien que cette procédure s'avère satisfaisante pour des câbles massifs, elle n'est pas adaptée à tous les câbles. En particulier, cette procédure s'adapte mal aux câbles multi-brins. Or, le câblage de porteur aéronautique ou aérospatial, où le critère de tenue aux vibrations notamment est prépondérant, nécessite de tels câbles, notamment pour leur caractéristique de souplesse.

L'invention a notamment pour but de pallier les inconvénients précités. A cet effet, l'invention a pour objet un procédé de raccordement, à un premier conducteur comportant un connecteur, d'un second conducteur formé par au moins un brin en aluminium ou alliage d'aluminium et comportant au moins une extrémité dont la forme autorise son introduction dans le connecteur du premier conducteur. Le procédé comporte au moins les étapes suivantes :
- une étape de mise en place des conducteurs, l'extrémité du second conducteur étant insérée dans le connecteur du premier conducteur ;
- une étape de magnétostriction, un effort électrodynamique étant généré dans le connecteur de manière à ce que ce que ledit connecteur s'écrase autour du second conducteur introduit dans le connecteur.
En outre, l'étape de magnétostriction peut comporter :
- une étape de chauffage du second conducteur et du connecteur jusqu'à leur point de déformation plastique
- une étape de stabilisation thermique du second conducteur et du connecteur ;
- une étape de mise en oeuvre de l'effet électrodynamique de la magnétostriction.

Le procédé peut aussi comporter une étape de préparation des deux conducteurs comportant :
- une étape où le second conducteur est dénudé à son extrémité ;
- une étape où la partie dénudée du second conducteur ainsi qu'au moins la partie interne du connecteur du premier conducteur est décapée ;
- une étape où la partie dénudée du second conducteur ainsi qu'au moins la partie interne du connecteur sont rincées puis séchées.

Avantageusement, l'étape de préparation des deux conducteurs et/ou l'étape de mise en place des conducteurs peut être réalisées sous un jet de gaz neutre.

L'invention a encore pour objet un dispositif générateur de magnétostriction adapté au raccordement, à un premier conducteur comportant un connecteur, d'un second conducteur formé par au moins un brin en aluminium ou alliage d'aluminium et comportant au moins une extrémité dont la forme autorise son introduction dans le connecteur du premier conducteur. Le dispositif comporte :
- une boucle d'induction générant un champ magnétique, la boucle d'induction étant adaptée à coupler ledit champ magnétique à la partie déformable du connecteur, la forme et les dimensions de la boucle étant adaptées au maintien de la partie déformable ;
- une inductance reliée via un quatrième commutateur à un générateur de tension, à un générateur de courant, et à un troisième commutateur qui permet de sélectionner si l'inductance est reliée au générateur de courant ou au générateur de tension ;
- un générateur de courant alternatif, couplé à l'inductance et à la boucle d'induction via un transformateur, un premier interrupteur étant disposé en parallèle du générateur de courant alternatif ;
- un circuit comprenant un second commutateur et une capacité en parallèle de l'inductance.

Avantageusement, la boucle d'induction et/ou le transformateur, et/ou l'induction peuvent être refroidis.

Le dispositif peut notamment être inclu dans une enveloppe torique coaxiale, ladite enveloppe extérieure contribuant à la réduction des champs magnétiques dus à l'induction et au transformateur par effet de spire de Frager.

Le dispositif peut être utilisé selon la séquence de fonctionnement suivante :
- ouverture du premier commutateur ;
- fermeture du second commutateur ;
- sélection de la position sur le troisième commutateur permettant d'alimenter l'inductance par le générateur de tension jusqu'à ce que qu'une énergie suffisante à la mise en oeuvre de l'effet électrodynamique soit stockée dans l'inductance ;
- mise en oeuvre du générateur de courant alternatif de manière à ce qu'une énergie thermique suffisante pour assurer une température correcte ait été transférée dans le connecteur ;
- mise en oeuvre du générateur de courant alternatif le temps nécessaire à la diffusion de la chaleur jusqu'au conducteur placé dans le connecteur et sélection de la position sur le troisième commutateur permettant d'alimenter l'inductance par le générateur de courant pendant ce temps ;
- ouverture du second commutateur et fermeture du premier interrupteur ;
- ouverture du quatrième commutateur.

L'invention a notamment pour avantages qu'elle ne nécessite pas que les conducteurs subissent un traitement de surface particulier : de simples conducteurs multibrins en aluminium non revêtu conviennent. L'invention permet de réduire les coûts de production, d'améliorer la qualité du raccordement. Les connecteurs employés ne sont plus nécessairement bimétalliques.

D'autres caractéristiques et avantages de l'invention apparaîtront à l'aide de la description qui suit faite en regard des dessins annexés qui représentent :
- la figure 1, par un synoptique, un procédé selon l'invention de raccordement de conducteurs électriques par magnétostriction ;
- la figure 2, par un synoptique, les différentes sous-étapes de l'étape de magnétostriction du procédé selon l'invention ;
- la figure 3, par un synoptique, les différentes sous-étapes de l'étape de préparation des conducteurs du procédé selon l'invention ;
- la figure 4, par un schéma, un dispositif générateur de magnétostriction selon l'invention.

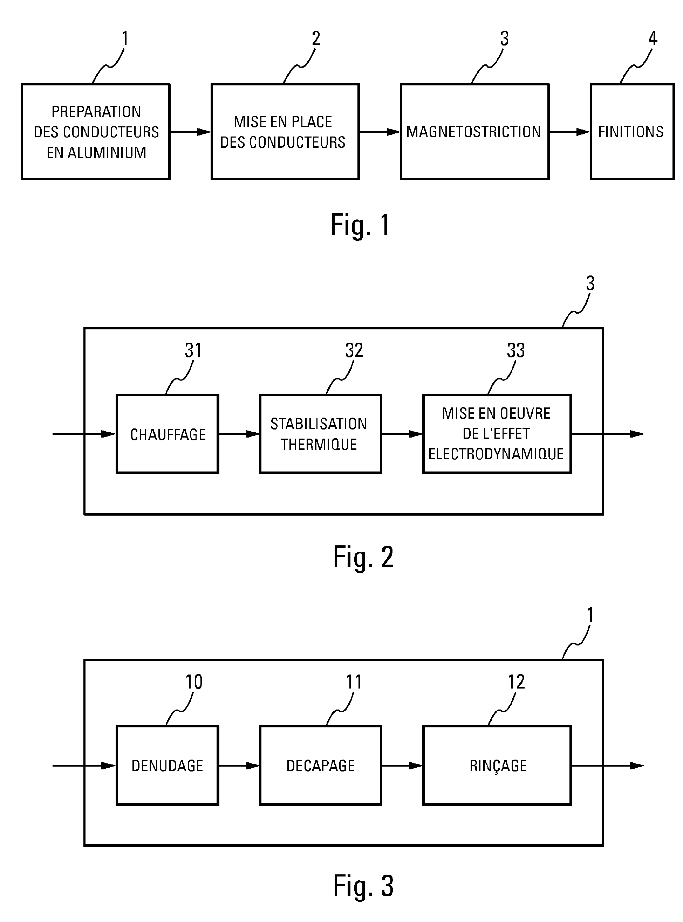

La figure 1 montre par un synoptique un procédé selon l'invention de raccordement de conducteurs électriques par magnétostriction.

La magnétostriction est une technique de soudage à froid par impulsion magnétique. Pour cela, une bobine, dans laquelle circule un courant électrique, est utilisée pour créer une force centripète dans un connecteur annulaire couplé électromagnétiquement à ladite bobine. Une variation brutale du courant circulant dans la bobine permet d'obtenir un effort électrodynamique important sur le connecteur annulaire, l'effort électrodynamique étant proportionnel à la dérivée du courant par rapport au temps. En outre le courant électrique produit sur le connecteur un effet thermique par induction.

Le procédé selon l'invention permet notamment le raccordement de deux conducteurs dont au moins l'un est un conducteur en aluminium ou alliage d'aluminium. Les conducteurs peuvent être des conducteurs à âme multibrins en alliage d'aluminium non traité. Le nombre de brins est défini de manière à ce que les conducteurs atteignent les caractéristiques mécaniques souhaitées, par exemple en terme de souplesse. Les brins peuvent être torsadés (notamment pour obtenir une meilleure cohésion) ou être droits (les brins peuvent alors avoir la forme d'un secteur angulaire de 120°). En particulier, les conducteurs peuvent répondre aux exigences d'isolement demandées dans le domaine aéronautique.

Le premier des deux conducteurs comporte un connecteur annulaire. Par exemple, le connecteur annulaire est un embout de raccordement de type broche de connecteur, terminée par une cavité sensiblement tubulaire. La cavité peut être en aluminium, en alliage d'aluminium ou encore tout matériau conducteur adapté à la magnétostriction. La cavité sensiblement tubulaire du premier conducteur peut être en matériau ductile à une température déterminée, à coefficient de dilatation sensiblement identique ou plus élevé que le métal composant le premier conducteur. Cette dernière caractéristique permet notamment de serrer le premier conducteur lors d'un refroidissement autour du second. Les dimensions et la forme de la cavité sont adaptées à celles du premier conducteur, en particulier dans le cas où les conducteurs n'ont pas une forme sensiblement circulaire. L'épaisseur du connecteur annulaire est notamment définie de manière à concilier sa ductilité lors de la mise en oeuvre de la magnétostriction, sa tenue mécanique, son aptitude à l'insertion dans un isolant. Le second conducteur comporte au moins une extrémité dont la forme autorise son introduction dans le connecteur du premier conducteur.

Le procédé selon l'invention comporte éventuellement une étape 1 de préparation des deux conducteurs. Sur le synoptique de la figure 3, sont représentées différentes sous-étapes de l'étape 1 de préparation des deux conducteurs. Ainsi, dans une étape 10, le second conducteur est dénudé, si nécessaire, à son extrémité, de manière à laisser apparaître les brins qui les composent. Puis dans une étape 11, la partie dénudée du second conducteur ainsi qu'au moins la partie interne du connecteur du premier conducteur sont décapées. Il est possible d'employer pour cela un tri-acide pour décaper l'alumine des différentes parties. Puis dans une étape 12, la partie dénudée du second conducteur ainsi qu'au moins la partie interne du connecteur du premier conducteur sont rincées. L'opération de rinçage peut s'effectuer à l'eau pure. L'étape 12 est complétée par une opération de séchage. Le séchage peut être réalisé à l'aide d'un jet de gaz neutre, comme l'Argon, ou d'un gaz réducteur éventuellement chauffé.

Le procédé selon l'invention comporte une étape 2 de mise en place des conducteurs. L'extrémité du second conducteur est insérée dans le connecteur du premier conducteur. L'ensemble formé par les deux conducteurs ainsi disposés est introduit dans le dispositif générateur de magnétostriction. Alternativement, le connecteur annulaire du premier conducteur est introduit dans le dispositif générateur de magnétostriction avant que l'extrémité du second conducteur soit insérée dans le connecteur annulaire. Afin d'augmenter la fiabilité, ces opérations peuvent être réalisées sous un jet de gaz neutre, de manière à ce que l'intérieur du connecteur annulaire soit le moins possible en contact avec de l'oxygène. Ce mode opératoire limite le risque de création d'un film d'alumine, lorsque le connecteur subira une montée en température au cours de la magnétostriction.

Le procédé selon l'invention comporte une étape 3 de magnétostriction. Un effort électrodynamique est généré par un dispositif générateur de magnétostriction dans le connecteur annulaire. L'effort produit sur le connecteur annulaire par la magnétostriction engendre un écrasement du conducteur annulaire autour du second conducteur introduit dans le connecteur annulaire. Cette technique permet d'obtenir une soudure métallurgique des brins conducteurs entre eux, et du connecteur annulaire avec la couche externe des brins conducteurs, l'ensemble étant étanche à l'air. Sur le synoptique de la figure 2, sont représentées différentes sous-étapes de l'étape 3 de magnétostriction. L'étape 3 de magnétostriction comporte une première sous-étape 31 de chauffage. L'étape 31 de chauffage peut être réaliser par induction. L'étape 31 de chauffage permet de chauffer le second conducteur et le connecteur jusqu'à leur point de déformation plastique. La déformation plastique augmente la fiabilité du raccordement en évitant le risque d'apparition de fissure ou d'amorce de criquage. La courbe représentant l'élévation de la température est une rampe relativement lente par rapport aux autres séquences se déroulant lors de la magnétostriction, à laquelle un signal alternatif haute fréquence pourra être superposé, pour améliorer notamment le chauffage par induction. L'étape 3 de magnétostriction comporte une seconde sous-étape 32 de stabilisation thermique. L'étape 32 de stabilisation thermique permet à l'onde thermique d'atteindre la surface des brins conducteurs. La courbe représentant l'élévation de la température est alors un pallier sensiblement constant, auquel un signal alternatif haute fréquence pourra être superposé. L'étape 3 de magnétostriction comporte une troisième sous-étape 33 de mise en oeuvre de l'effet électrodynamique de la magnétostriction. La sous-étape 33 a une durée maximum de quelques dizaines de millisecondes. Si nécessaire, la sous-étape 33 est suivie d'une étape de refroidissement, pouvant aller jusqu'à l'écrouissage du connecteur, éventuellement complété par un recuit.

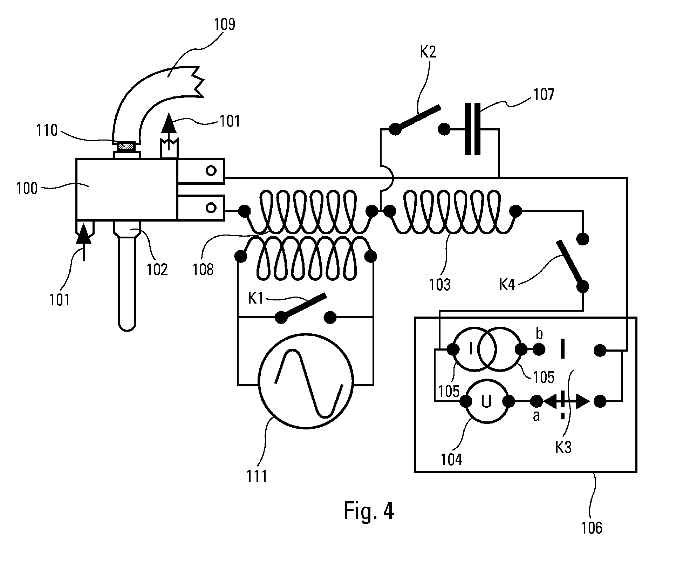

La figure 4 illustre par un schéma un dispositif générateur de magnétostriction selon l'invention. Les éléments identiques aux éléments déjà présentés sur les autres figures portent les mêmes références. Le dispositif est notamment adapté à la mise en oeuvre de l'étape 3 de magnétostriction du procédé selon l'invention.

Le dispositif comporte une boucle d'induction 100 générant le champ magnétique. La boucle d'induction 100 couple ledit champ magnétique à la partie déformable 102 d'un connecteur, la partie dénudée d'un conducteur 110 (le conducteur 110 étant par ailleurs compris dans un isolant 109) ayant été introduite dans la partie déformable 102. La forme et les dimensions de la boucle 100 sont adaptées en outre au maintien de la partie déformable 102. La partie déformable 102 peut être pincée, par exemple à l'aide d'une boucle ouvrante ou encore enfilée. La boucle d'induction 100 peut être refroidie, notamment par un liquide de refroidissement 101. L'opération de refroidissement permet à la fois de garantir la tenue mécanique de la boucle d'induction 100, et une température supportable par l'opérateur manipulant le dispositif.

Le dispositif comporte une inductance 103 reliée à un générateur de rampe 106. Le générateur de rampe 106 est représenté sur la figure 4, notamment pour une meilleure compréhension, par un générateur de tension 104 et un générateur de courant 105, et un troisième commutateur K3 permettant de sélectionner l'un ou l'autre. Cependant, le générateur de rampe 106 commutés pourra être constitué d'un unique générateur doté de deux modes de fonctionnement. Il pourra en outre comporter une protection dynamique contre les surtensions externes, par exemple à l'aide d'un régulateur de tension à découpage. L'inductance 103 est relié via un quatrième commutateur K4 au générateur de rampe 106.

L'inductance 103 peut donc être reliée au générateur de tension 104 ou au générateur de courant 105 via le troisième commutateur K3 qui permet de sélectionner si l'inductance 103 est reliée au générateur de courant 105 (troisième commutateur K3 en position a sur la figure 4) ou au générateur de tension 104 (troisième commutateur K3 en position b sur la figure 4). Lorsque l'inductance 103 est reliée au générateur de tension 104, elle stocke l'énergie fournie par le générateur de tension 104. En effet, l'inductance 103 est parcourue par un courant fourni par le générateur de tension 104 qui croit linéairement avec le temps. L'énergie ainsi stockée croit quadratiquement avec le temps. Lorsque l'inductance 103 est reliée au générateur de courant 105 délivrant un courant constant, l'inductance 103 maintient l'énergie qu'elle a auparavant accumulée.

Lorsque l'inductance 103 est mise en court-circuit par l'intermédiaire du quatrième commutateur K4, elle restitue l'énergie qu'elle a stockée, entraînant une variation de courant soudaine. Afin de maximiser la variation de courant, notamment pour maximiser un effort électrodynamique au niveau de la boucle d'induction 100, la résistance ohmique du circuit doit être la plus faible possible. En particulier, l'inductance 103 doit avoir une résistance ohmique la plus limitée possible. En revanche, pour que l'énergie emmagasinée au sein de l'inductance 103 soit maximale, il faut que l'inductance de l'inductance 103 soit la plus élevée possible : l'inductance 103 doit donc comporter le plus grand nombre de spires. Pour concilier ces deux exigences contradictoires, il est possible par exemple de refroidir, voire de réfrigérer l'inductance 103. L'inductance 103 sera par exemple de type torique et/ou bobinée sur circuit magnétique, à la fois pour maximiser l'inductance et minimiser les fuites magnétiques.

Le quatrième commutateur K4 est soumis à d'importantes contraintes électriques, mécaniques et thermiques, et doit en conséquence être dimensionné en conséquence. En outre, une aide à la commutation rapide pourra être adjointe au quatrième commutateur K4. Par exemple, un disjoncteur électromécanique à soufflage d'arc pneumatique ou magnétique pourra répondre à ces contraintes.

Le dispositif comporte un générateur de courant alternatif 111. Le générateur de courant alternatif fournit une puissance destinée au chauffage la partie déformable 102 du connecteur. Le générateur de courant alternatif 111 est couplé à l'inductance 103 et à la boucle d'induction via un transformateur 108. Un premier interrupteur K1 est disposé en parallèle du générateur de courant alternatif 111 de manière à pouvoir court-circuiter le transformateur 108 au primaire ou au secondaire, selon le dimensionnement relatif des éléments. Le premier interrupteur K1 permet notamment de protéger le générateur de courant alternatif 111 de l'impulsion de courant de lors de la magnétostriction. Le circuit magnétique du transformateur 108 pourra être saturable (par découplage entre le primaire et le secondaire provoqué par la saturation résultant du passage de l'impulsion engendrée lors de la magnétostriction), améliorant la protection du générateur de courant alternatif 111 au prix d'une légère déperdition énergétique. En particulier, le transformateur 108 doit avoir une résistance ohmique la plus limitée possible. Il est possible par exemple de refroidir, voire de réfrigérer le transformateur 108. Le générateur de courant alternatif 111 est réglable pour au moins deux niveaux de puissance (un niveau adapté au chauffage et un niveau adapté au maintien en température), et pour des valeurs variables en fonction du type de la partie déformable 102 du connecteur.

L'inductance 103 comporte en parallèle un circuit comprenant un deuxième commutateur K2 et une capacité 107. La capacité 107 permet notamment de court-circuiter l'inductance 103 lorsque le générateur de courant alternatif 111 est utilisé pour le chauffage de la partie déformable 102. Lorsque l'inductance 103 accumule de l'énergie, le contenu spectral est trop bas pour que le courant dans l'inductance 103 soit accumulé dans la capacité 107.

Le câblage employé par le dispositif selon l'invention devra être optimiser en terme de rayonnement et de résistivité électrique. Dans un mode de réalisation, une méthode d'élimination de l'inductance parasite induite dans le circuit est de dupliquer chaque segment de câblage par sa copie à l'identique, en y inversant le sens du courant. Dans un autre mode de réalisation, le câblage est réalisé à l'aide d'un câble coaxial à deux conducteurs tubulaires, refroidi par la circulation d'un liquide de refroidissement. Un tel mode de réalisation peut également s'appliquer à l'inductance 103, au transformateur 108, au quatrième commutateur K4 et au générateur de rampe 106.

Le dispositif selon l'invention peut être construit de manière à être inclus dans une structure coaxiale. Ainsi le dispositif selon l'invention peut inclus dans une enveloppe torique coaxiale. Ladite enveloppe extérieure pourra contribuer à la réduction des champs magnétiques dus à l'induction 103 et au transformateur 108, par effet de spire de Frager.

La séquence de fonctionnement du dispositif générateur de magnétostriction selon l'invention est la suivante :
- Initialement,
   o le premier commutateur K1 est ouvert, le générateur de courant alternatif 111 est alors connecté au circuit ;
   o le deuxième commutateur K2 est fermé, la capacité 107 est alors en charge.
- Dans une phase de montée en courant et de chauffage correspondant notamment à la sous-étape 31 du procédé selon l'invention :
   o l'inductance 103 est alimentée par le générateur de tension 104 (le troisième commutateur K3 est en position a), l'inductance étant parcourue par un courant qui croit linéairement, jusqu'à ce que qu'une énergie suffisante à la mise en oeuvre de l'effet électrodynamique (sous-étape 33 du procédé selon l'invention) soit stockée dans l'inductance 103 (le temps devant par ailleurs être choisi assez long pour éviter qu'une dérivée du courant trop forte ne conduise à une déformation prématurée du connecteur 102) ;
   o le générateur de courant alternatif 111 fournit une puissance de manière à ce qu'à la fin de la montée en courant, une énergie thermique suffisante pour assurer une température correcte ait été transférée dans l'embout 102 ;
- Dans une phase de diffusion thermique et de maintien du courant correspondant notamment à l'étape 32 du procédé selon l'invention, l'énergie nécessaire à une température correcte étant dans l'embout 102, mais mal répartie (trop proche de la surface, à cause de l'effet de peau),
   o le générateur de courant alternatif 111 fournit, durant le temps nécessaire à la diffusion de la chaleur jusqu'au conducteur placé dans le connecteur 102, une puissance nécessaire au maintien en température du connecteur 102, dimensionnée pour compenser les pertes thermiques ;
   o le générateur de courant 105 alimente l'inductance 103 en courant constant (position b du troisième commutateur K3), de manière à compenser les pertes dues à la résistance ohmiques du circuit.
- Le générateur de courant alternatif 111 est protégé en :
   o éteignant le générateur de courant alternatif 111 ;
   o en ouvrant le deuxième commutateur K2 pour protéger la capacité 107, et pour éviter qu'elle dérive une partie de l'énergie destinée à la boucle d'induction 100 ;
   o en fermant le premier interrupteur K1 pour protéger le générateur de courant alternatif 111 ;
- Dans une phase de sertissage correspondant notamment à la sous-étape 33 du procédé selon l'invention, le quatrième commutateur K4 est ouvert de manière à engendrer une rupture du courant dans l'inductance 103 aussi brutale que possible ;
- Dans une phase optionnelle de refroidissement et de recuit du connecteur 102 correspondant à l'étape 4 du procédé selon l'invention, le quatrième commutateur K4 reste ouvert.

## Revendications

1. Procédé de raccordement, à un premier conducteur comportant un connecteur, d'un second conducteur formé par au moins un brin en aluminium ou alliage d'aluminium et comportant au moins une extrémité dont la forme autorise son introduction dans le connecteur du premier conducteur **caractérisé en ce qu'**il comporte au moins les étapes suivantes :
• une étape (2) de mise en place des conducteurs, l'extrémité du second conducteur étant insérée dans le connecteur du premier conducteur ;
• une étape (3) de magnétostriction, un effort électrodynamique étant généré dans le connecteur de manière à ce que ledit connecteur s'écrase autour du second conducteur introduit dans le connecteur.

2. Procédé selon la revendication 1 **caractérisé en ce que** l'étape (3) de magnétostriction comporte :
• une étape (31) de chauffage du second conducteur et du connecteur jusqu'à leur point de déformation plastique
• une étape (32) de stabilisation thermique du second conducteur et du connecteur ;
• une étape (33) de mise en oeuvre de l'effet électrodynamique de la magnétostriction.

3. Procédé selon l'une quelconque des revendications 1 à 2 **caractérisé en ce qu'**il comporte une étape (1) de préparation des deux conducteurs comportant :
• une étape (10) où le second conducteur est dénudé à son extrémité ;
• une étape (11) où la partie dénudée du second conducteur ainsi qu'au moins la partie interne du connecteur du premier conducteur est décapée ;
• une étape (12) où la partie dénudée du second conducteur ainsi qu'au moins la partie interne du connecteur sont rincées puis séchées.

4. Procédé selon l'une quelconque des revendications précédentes **caractérisé en ce que** l'étape (1) de préparation des deux conducteurs et/ou l'étape (2) de mise en place des conducteurs sont réalisées sous un jet de gaz neutre.

5. Dispositif générateur de magnétostriction adapté au raccordement, à un premier conducteur comportant un connecteur, d'un second conducteur formé par au moins un brin en aluminium ou alliage d'aluminium et comportant au moins une extrémité dont la forme autorise son introduction dans le connecteur du premier conducteur **caractérisé en ce qu'**il comporte :
• une boucle d'induction (100) générant un champ magnétique, la boucle d'induction (100) étant adaptée à coupler ledit champ magnétique à la partie déformable (102) du connecteur, la forme et les dimensions de la boucle (100) étant adaptées au maintien de la partie déformable (102) ;
• une inductance (103) reliée via un quatrième commutateur (K4) à un générateur de tension (104), à un générateur de courant (105), et à un troisième commutateur (K3) qui permet de sélectionner si l'inductance (103) est reliée au générateur de courant (105) ou au générateur de tension (104) ;
• un générateur de courant alternatif (111), couplé à l'inductance (103) et à la boucle d'induction (100) via un transformateur (108), un premier interrupteur (K1) étant disposé en parallèle du générateur de courant alternatif (111) ;
• un circuit comprenant un second commutateur (K2) et une capacité (107) en parallèle de l'inductance (103).

6. Dispositif selon la revendication 5 **caractérisé en ce que** la boucle d'induction (100) et/ou le transformateur (108), et/ou l'induction (103) sont refroidis.

7. Dispositif selon l'une quelconque des revendications 5 à 6, **caractérisé en ce qu'**il est inclus dans une enveloppe torique coaxiale, ladite enveloppe extérieure contribuant à la réduction des champs magnétiques dus à l'induction (103) et au transformateur (108) par effet de spire de Frager.

8. Utilisation du dispositif selon l'une quelconque des revendications 5 à 7, selon la séquence de fonctionnement suivante :
• ouverture du premier commutateur (K1) ;
• fermeture du second commutateur (K2) ;
• sélection de la position (a) sur le troisième commutateur (K3) permettant d'alimenter l'inductance (103) par le générateur de tension (104) jusqu'à ce que qu'une énergie suffisante à la mise en oeuvre de l'effet électrodynamique soit stockée dans l'inductance (103);
• mise en oeuvre du générateur de courant alternatif (111) de manière à ce qu'une énergie thermique suffisante pour assurer une température correcte ait été transférée dans le connecteur (102) ;
• mise en oeuvre du générateur de courant alternatif (111) le temps nécessaire à la diffusion de la chaleur jusqu'au conducteur placé dans le connecteur (102) et sélection de la position (b) sur le troisième commutateur (K3) permettant d'alimenter l'inductance (103) par le générateur de courant (105) pendant ce temps ;
• ouverture du second commutateur (K2) et fermeture du premier interrupteur (K1) ;
• ouverture du quatrième commutateur (K4).
